# EUROPÄISCHE PATENTANMELDUNG

(11) **EP 3 889 707 A1**
(43) Veröffentlichungstag der Anmeldung: **06.10.2021**
(21) Anmeldenummer: 20167176.5
(22) Anmeldetag: 31.03.2020
(51) Int. Cl.: G05B 19/4063, G06Q 20/14, G05B 19/418, G07C 3/00, H04L 12/14, G07C 3/08

(54) **VERFAHREN ZUM ERMITTELN VON BETRIEBSNUTZUNGSDATEN EINER INDUSTRIELLEN VORRICHTUNG**

(71) Anmelder: Siemens Aktiengesellschaft, 80333 München (DE)
(72) Erfinder: Falk, Rainer, 85586 Poing (DE); Seuschek, Hermann, 81373 München (DE); Wimmer, Martin, 85579 Neubiberg (DE)

(57) **Zusammenfassung**

Verfahren zum Ermitteln von Betriebsnutzungsdaten einer industriellen Vorrichtung (10), die von einer Steuervorrichtung (20) gesteuert wird, umfassend
- Erfassen (S1) einer zeitlichen Abfolge von Steuerungsdatenpaketen, die über eine Kommunikationsverbindung (101) zwischen der Steuervorrichtung und der industriellen Vorrichtung übertragen werden,
- Identifizieren (S2) von mindestens einer Nutzungsinformation in der zeitlichen Abfolge der erfassten Steuerungsdatenpakete,
- Zuordnen (S3) einer Nutzungsart sowie einer Nutzungsdauer anhand der mindestens einen identifizierten Nutzungsinformation, und
- Bereitstellen (S4) der zugeordneten Nutzungsart und Nutzungsdauer.

## Beschreibung

Die Erfindung betrifft ein Verfahren sowie eine Nutzungsermittlungsvorrichtung zum Ermitteln von Betriebsnutzungsdaten einer industriellen Vorrichtung, die von einer Steuervorrichtung gesteuert wird.

Maschinen einer industriellen Anlage, z. B. Produktionsmaschinen, Werkzeugmaschinen oder auch Feldgeräte einer Fertigungsanlage werden herkömmlicherweise von einem Betreiber gekauft oder geleast, das heißt, für eine begrenzte Zeit gemietet. Ein Kauf erfordert allerdings hohe Anfangsinvestitionen, und ein Leasing führt zu festen Leasingzahlungen und sind ungünstig in Bezug auf ein Kosten-Nutzen-Verhältnis. Daher werden zunehmend "Pay per Use"-Modelle genutzt, bei denen die Maschine vom Nutzer nicht gekauft oder geleast wird, sondern die tatsächliche Nutzung abgerechnet und bezahlt wird.

Bei Maschinen sind beispielsweise Betriebsstundenzähler bekannt, die eine Nutzungsdauer der Maschine über einen Betriebsschalter oder über spezielle Sensoren, beispielsweise Vibrations- oder Gyrosensoren, ermitteln. Die detektierte physikalische Information wird verwendet, um auf die Nutzung der Maschine zu schließen. Beispiele für physikalische Nutzungsinformation sind Temperatur, Vibration, Durchflussmenge, Spannung oder Strom. Dies erfordert in oder an der Maschine zusätzliche Sensoren, die manipuliert werden können und daraus abgeleitete Maschinennutzungsinformationen verfälschen. Eine solche Lösung mit zusätzlichen Sensoren ist somit bei Maschinen und sonstigen Komponenten einer Anlage nur bedingt zuverlässig.

Es ist somit die Aufgabe der vorliegenden Erfindung, Maschinennutzungsdaten korrekt und zuverlässig gegenüber Manipulation zu erfassen und bereitzustellen.

Die Aufgabe wird durch die in den unabhängigen Ansprüchen beschriebenen Maßnahmen gelöst. In den Unteransprüchen sind vorteilhafte Weiterbildungen der Erfindung dargestellt.

Ein erster Aspekt der Erfindung betrifft ein Verfahren zum Ermitteln von Betriebsnutzungsdaten einer industriellen Vorrichtung, die von einer Steuervorrichtung gesteuert wird, umfassend
- Erfassen einer zeitlichen Abfolge von Steuerungsdatenpaketen, die über eine Kommunikationsverbindung zwischen der Steuervorrichtung und der industriellen Vorrichtung übertragen werden,
- Identifizieren von mindestens einer Nutzungsinformation in der zeitlichen Abfolge der erfassten Steuerungsdatenpakete,
- Zuordnen einer Nutzungsart sowie einer Nutzungsdauer der industriellen Vorrichtung anhand der mindestens einen identifizierten Nutzungsinformation, und
- Bereitstellen der zugeordneten Nutzungsart und Nutzungsdauer.

Eine industrielle Vorrichtung kann dabei beispielsweise eine Maschine einer industriellen Anlage, z. B. mindestens eine Produktionsmaschine, Werkzeugmaschine oder auch ein aus einem oder mehreren Feldgeräten bestehender Teilbereich einer Automatisierungsanlage sein. Die industrielle Vorrichtung wird durch eine Steuerungskommunikation von einer Steuervorrichtung gesteuert. Die Steuerungsdatenpakete können dabei kontinuierlich, zyklisch in vorgegebenen Zeitintervallen oder durch ein Ereignis ausgelöst erfasst werden.

Dies hat den Vorteil, dass eine Manipulation wesentlich erschwert wird. So genügt es nicht, einen einfachen physikalischen Sensor oder die erfasste Messgröße zu manipulieren. Vielmehr müsste durch einen Angreifer die Steuerungskommunikation derart verändert werden, dass der gewünschte Betrieb immer noch erfolgt, gleichzeitig aber zu einer unterschiedlichen Nutzungsinformation führt. Im Gegensatz zu einer Sensorbasierten Messung ist das Verfahren somit wesentlich komplexer und eine mögliche Manipulation für einen Angreifer oder auch Nutzer der industriellen Vorrichtung mit dem Risiko behaftet, dass die eigentliche Nutzung nicht mehr sicher bzw. zuverlässig möglich ist. Damit ist eine erfolgreiche Manipulation mit einem hohen Aufwand und Risiko für den Angreifer verbunden.

In einer vorteilhaften Ausführungsform werden zum Identifizieren der Nutzungsinformation die erfassten Steuerungsdatenpakete nach mindestens einem protokollabhängigen Übertragungsparameter, insbesondere einer MAC-Adresse, einer IP-Adresse, einer Portnummer oder einer Protokollkennung gefiltert.

Eine Filterung nach protokollabhängigen Übertragungsparametern ermöglicht es, gezielt relevante Datenpakete aus dem gesamten auf der Kommunikationsverbindung übertragenen Datenstrom zu extrahieren und somit eine weitere Identifizierung von relevanter Nutzungsinformation zu erleichtern.

In einer vorteilhaften Ausführungsform wird die Nutzungsinformation durch ein Ermitteln von Steuerungsprotokollnachrichten und/oder Überwachungsprotokollnachrichten in den erfassten Steuerdatenpaketen identifiziert.

Anhand von Steuerprotokollnachrichten kann beispielsweise ein Anstoßen bzw. ein Beenden einer Aktion in der industriellen Vorrichtung erkannt werden. Durch Überwachungsprotokollnachrichten kann beispielsweise auf einen Status oder eine Leistung der industriellen Vorrichtung geschlossen werden. Dies sind besonders relevante Informationen, aus denen sich bereits Rückschlüsse auf Nutzungsart und Nutzungsdauer ableiten lassen.

In einer vorteilhaften Ausführungsform wird die Nutzungsinformation durch Auswerten eines Inhalts der Steuerungsprotokoll- und/oder Überwachungsprotokoll-nachrichten identifiziert.

Beispielsweise können durch eine sogenannte "Deep packet inspection" des Kopf- und/oder des Nutzdatenteils der Steuerungsdatenpakete detaillierte Nutzungsinformationen gewonnen werden. So können aus der Steuerungsprotokollnachricht ein konkreter Steuerbefehl ermittelt werden. So kann aus einem Start- und Stoppbefehl und deren Parametrierung auf eine Nutzungsart, deren Leistung und auch die Nutzungsdauer geschlossen werden.

In einer vorteilhaften Ausführungsform wird die mindestens eine Nutzungsinformation anhand eines Verkehrsmusters, das aus statistischen Eigenschaften der erfassten Steuerungsdatenpakete ermittelt wird, identifiziert.

Statistische Eigenschaften der erfassten Steuerungsdatenpakete sind beispielsweise ein Datenvolumen, eine Anzahl und eine zeitliche Verteilung der Steuerungsdatenpakete. Durch Vergleichen des ermittelten Verkehrsmusters mit bekannten Verkehrsmustern können die Betriebsart und/oder die Betriebsdauer zugeordnet werden. Damit kann auch verschlüsselte Steuerungskommunikation ausgewertet und zur Nutzungsermittlung verwendet werden.

In einer vorteilhaften Ausführungsform werden anhand eines maschinellen Lernverfahrens, das auf die erfassten Steuerungsdatenpakete angewandt wird, die Nutzungsinformation identifiziert und der Nutzungsart und Nutzungsdauer zugeordnet.

Maschinelle Lernverfahren können selbstlernend im laufenden Betrieb neue Muster erkennen und sind somit besonders flexibel einsetzbar.

In einer vorteilhaften Ausführungsform werden Steuerungsdatenpakete dupliziert und ohne jeglichen Rückfluss von Daten an die industrielle Vorrichtung aus der Kommunikationsverbindung ausgekoppelt.

Das Erfassen einer zeitlichen Abfolge von Steuerungspaketen erfolgt durch Duplizieren und Auskoppeln, beispielsweise induktivem Auskoppeln der Steuerungsdatenpakete und Weiterleiten zur weiteren Auswertung. Dies hat den Vorteil, dass durch die Auskopplung der Steuerungsdatenpakete der Steuerungsdatenverkehr zur industriellen Vorrichtung nicht beeinflusst oder manipuliert werden kann. So kann das Verfahren auch in zulassungspflichtigen und sicherheitskritischen industriellen Anlagen eingesetzt werden.

In einer vorteilhaften Ausführungsform werden die Steuerungsdatenpakete innerhalb der industriellen Vorrichtung erfasst.

Dies erschwert eine Manipulation der Steuerungskommunikation vor dem Abgriff zur Nutzungsermittlung. Dies ist auch dann vorteilhaft, wenn die Steuerungsdatenpakete vor einer kryptografischen Behandlung, insbesondere Verschlüsselung der Steuerungsdatenpakete erfasst werden. Der Inhalt der Steuerungsdatenpakete ist dann einfach erkennbar und kann damit insbesondere gut zum Auswerten des Inhalts des Steuerungsdatenpakets genutzt werden.

In einer vorteilhaften Ausführungsform werden das Identifizieren und/oder das Zuordnen und/oder das Bereitstellen in der abgesetzten Auswertevorrichtung durchgeführt.

Dies hat den Vorteil, dass insbesondere rechenaufwendige Identifizierungs- und Zuordnungsfunktionen nicht direkt in oder bei der industriellen Vorrichtung durchgeführt werden müssen. Die Betriebsnutzungsermittlung kann somit durch eine einfach strukturierte Nutzungsermittlungsvorrichtung mit geringer Rechenleistung durchgeführt werden. Somit kann der Verarbeitungsaufwand in eine zentrale Vorrichtung ausgelagert werden.

In einer vorteilhaften Ausführungsform werden die zugeordnete Nutzungsart und -dauer kryptografisch geschützt bereitgestellt.

So können beispielsweise die erfasste Nutzungsart und -dauer verschlüsselt abgespeichert werden und die aufgezeichneten Daten zusätzlich signiert werden. Damit kann die Integrität der Daten überprüft und eine Manipulation der Daten erschwert werden. Des Weiteren können die Daten nur von berechtigten Stellen entschlüsselt und somit gelesen werden.

In einer vorteilhaften Ausführungsform werden Überwachungsdaten zwischen der Steuervorrichtung und einer übergeordneten Überwachungseinheit erfasst und ausgewertet und gegenüber der Nutzungsinformation und/oder der Nutzungsart und Nutzungsdauer auf Plausibilität überprüft.

Dies hat den Vorteil, dass Fehler bei der Erfassung und Auswertung von Nutzungsdauer und -art frühzeitig erkannt werden können. So kann insbesondere erkannt werden, wenn die Steuerungskommunikation auf eine Nutzung der industriellen Vorrichtung schließen lässt, aber keine entsprechenden Überwachungsdaten an die übergeordnete Überwachungseinheit übertragen werden.

In einer vorteilhaften Ausführungsform wird ein Warnsignal bereitgestellt, wenn in einer vorbestimmten Zeitdauer keine Nutzung und Nutzungsdauer an eine Überwachungsvorrichtung bereitgestellt werden und/oder ein nicht erwartetes Systemverhalten erkannt wird.

Dies ermöglicht es, eine Betriebsbereitschaft, auch als "Lifeliness" der industriellen Vorrichtung zu überwachen.

In einer vorteilhaften Ausführungsform werden in einem industriellen System, das mehr als ein Teilnetz enthält und ein Teilnetz jeweils aus einer industriellen Vorrichtung und einer die industrielle Vorrichtung steuernde Steuervorrichtung umfasst, die Nutzungsart und Nutzungsdauer für jedes Teilnetz ermittelt und bereitgestellt.

Dies hat den Vorteil, dass Nutzungsart und Nutzungsdauer für jedes einzelne Teilnetz eines industriellen Systems vorliegen, sodass feingranular unterschiedliche Nutzungsarten und Nutzungsdauer des gesamten Systems ermittelt werden können.

Ein zweiter Aspekt der Erfindung betrifft eine Nutzungsermittlungsvorrichtung zum Ermitteln von Betriebsnutzungsdaten umfassend eine Datenerfassungseinheit, die mit einer Kommunikationsverbindung einer industriellen Vorrichtung verbindbar ist und derart ausgebildet ist, eine zeitliche Abfolge von Steuerungsdatenpaketen zu erfassen, eine Identifizierungseinheit, die derart ausgebildet ist, mindestens eine Nutzungsinformation in dem zeitlichen Verlauf der erfassten Steuerungsdatenpakete zu identifizieren, eine Zuordnungseinheit, die derart ausgebildet ist, eine Nutzungsart sowie eine Nutzungsdauer anhand der mindestens einen identifizierten Nutzungsinformation zuzuordnen und eine Bereitstellungseinheit, die derart ausgebildet ist, die zugeordnete Nutzungsart und Nutzungsdauer bereitzustellen.

Ein Vorteil der Nutzungsermittlungsvorrichtung ist es, dass die Nutzungsart und Nutzungsdauer aus dem Betrieb der überwachten industriellen Vorrichtung vorhandenen Steuerungsdatenkommunikation bzw. Steuerungsdatenpaketen ermittelt wird, ohne zusätzliche Sensoren dazu zu benötigen. Insbesondere die Identifizierung-, Zuordnungs- und evtl. auch die Bereitstellungseinheit können abgesetzt von der zu überwachenden industriellen Vorrichtung ausgebildet sein, beispielsweise in einem Cloud-Backend, beispielsweise einem Server, der zusätzliche Bearbeitungskapazität bereitstellt. Die Datenerfassungseinheit erfasst dabei die Steuerungskommunikation innerhalb der industriellen Vorrichtung, bevorzugt vor einer kryptografischen Bearbeitung der Steuerungskommunikation. Alternativ kann die Datenerfassungseinheit die Steuerungsdatenpakete auf einer Kommunikationsverbindung außerhalb der industriellen Vorrichtung erfassen. Die Datenerfassungseinheit kann zusätzlich eine weitere Erfassungseinheit umfassen, die die Überwachungsdaten zwischen der Steuervorrichtung und einer übergeordneten Überwachungseinrichtung erfasst.

Ein dritter Aspekt der Erfindung betrifft ein Computerprogrammprodukt, umfassend ein nicht flüchtiges computerlesbares Medium, das direkt in einen Speicher eines digitalen Computers ladbar ist, umfassend Programmcodeteile, die dazu geeignet sind, die Schritte des Verfahrens durchzuführen.

Die jeweiligen Einheiten, z. B. die Datenerfassungseinheit, Identifizierungseinheit, Zuordnungseinheit und/oder Bereitstellungseinheit kann hardwaretechnisch und/oder auch softwaretechnisch implementiert sein. Bei einer hardwaretechnischen Implementierung kann die jeweilige Einheit als Vorrichtung oder als Teil einer Vorrichtung z. B. als Computer oder als Mikroprozessor ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Ausführungsbeispiele des erfindungsgemäßen Verfahrens sowie der erfindungsgemäßen Nutzungsermittlungsvorrichtung sind in den Zeichnungen beispielhaft dargestellt und werden anhand der nachfolgenden Beschreibung näher erläutert. Es zeigen:
- Fig. 1: ein industrielles System mit mindestens einer industriellen Vorrichtung, die von einer Steuervorrichtung gesteuert wird und einer Ausführungsform der erfindungsgemäßen Nutzungsermittlungsvorrichtung in Blockdarstellung;
- Fig. 2: ein Ausführungsbeispiel des erfindungsgemäßen Verfahrens als Flussdiagramm; und
- Fig. 3: ein Ausführungsbeispiel der erfindungsgemäßen Nutzungsermittlungsvorrichtung in Blockdarstellung.

Einander entsprechende Teile sind in allen Figuren mit den gleichen Bezugszeichen versehen.

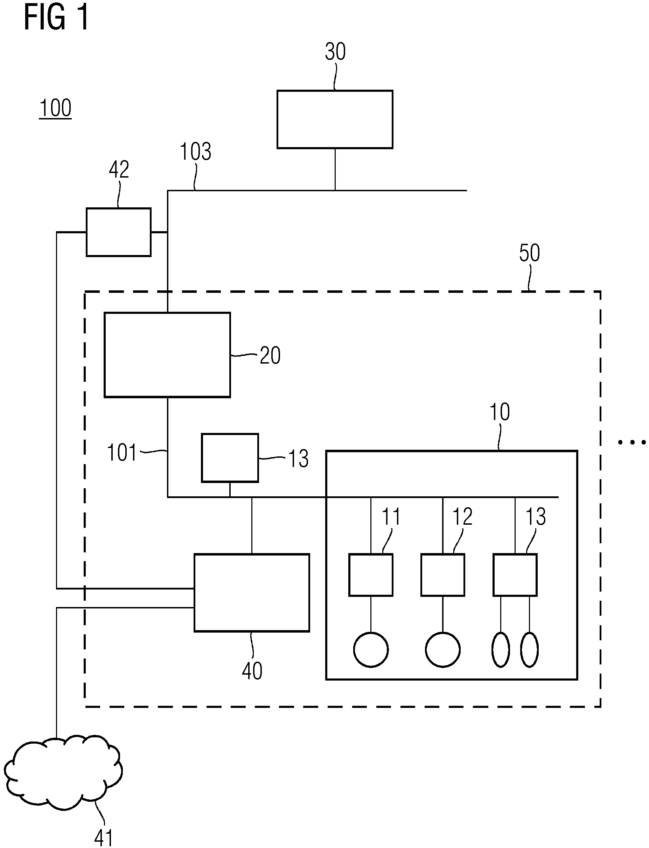

In Fig. 1 zeigt ein Anwendungsszenario in Form eines industrielles Systems 100 in dem das erfindungsgemäße Verfahren durch eine Nutzungsermittlungsvorrichtung 40 ausgeführt wird. Das industrielle System 100 umfasst mindestens ein Teilnetz 50, wobei jedes Teilnetzwerk eine Steuervorrichtung 20, eine industrielle Vorrichtung 10 sowie eine Kommunikationsverbindung 101 zwischen der Steuervorrichtung 20 und der industrielle Vorrichtungen 10 umfasst. Die industrielle Vorrichtung 10 wird durch Steuerungsdatenpakete gesteuert, die über die Kommunikationsverbindung 101 übermittelt werden. Das Teilnetzwerk 50 umfasst eine Nutzerschnittstelle 13 auf der die ermittelte Betriebsnutzungsdaten, d.h. die ermittelten Nutzungsarten und Nutzungsdauer der industriellen Vorrichtung 10 ausgegeben, beispielsweise angezeigt werden können. Das industrielle System 100 kann mehrere Teilnetzwerke 50 umfassen, für die jeweils separat Betriebsnutzungsdaten ermittelt werden.

Die Steuervorrichtung 20 ist über ein Systemkommunikationsnetzwerk 103 mit einer Überwachungsvorrichtung 30 verbunden. Die Überwachungsvorrichtung 30 kann beispielsweise ein SCADA-System sein, das technischer Prozesse mittels eines Computersystems überwacht und steuert. Des Weiteren kann auch ein Herstellungsausführungssystem im Englischen als Manufacturing Execution System MES verbunden sein. Zwischen der Steuervorrichtung 20 und der Überwachungsvorrichtung 30 werden Überwachungsdaten übertragen, wie beispielsweise Fehlermeldungen der Steuervorrichtung 20 oder ihrer verbundenen industriellen Vorrichtung 10 oder auch Statusnachrichten der industriellen Vorrichtungen und Steuervorrichtung 20.

Die dargestellte industrielle Vorrichtung 10 umfasst beispielhaft einen Aktor 11, einen Sensor 12 und ein Feldgerät 13 zur Steuerung von analogen Sensoren oder Aktoren.

Zur Ermittlung der Betriebsnutzungsdaten ist die Nutzungsermittlungsvorrichtung 40 zwischen der industriellen Vorrichtung 10 und der Steuervorrichtung 20 mit der Kommunikationsverbindung 101 verbunden. Die Nutzungsermittlungsvorrichtung 40 ermittelt anhand der Steuerungskommunikation auf der Kommunikationsverbindung die Betriebsnutzungsdaten der industriellen Vorrichtung 10. Die Nutzungsermittlungsvorrichtung 40 ist optional mit einem Server 41 verbunden, in dem Teilfunktionen zur Ermittlung der Betriebsnutzungsdaten ausführt werden können. Der Server 41 kann beispielsweise Rechenkapazität und Speicherplatz bereitstellen.

Des Weiteren ist optional eine Erfassungsvorrichtung 42 mit der Nutzungsermittlungsvorrichtung 40 verbunden. Die Erfassungsvorrichtung 42 koppelt Überwachungskommunikation, die zwischen der Steuervorrichtung 20 und der Überwachungsvorrichtung 30 übermittelt wird, aus und übermittelt diese an die Nutzungsermittlungsvorrichtung 40.

Die Kommunikationsverbindung 101 übermittelt Steuerungsdaten eines Steuerungsprotokolls, wie beispielsweise einem industriellen Internetprotokoll, einem IP-Netzwerk, einem OPC UA (Open Platform Communication Unified Architecture) Protokoll, MQTT (Message Queuing Telemetrie Transport) Protokoll oder auch einem Profinet- oder Profisafe-Protokoll. Um eine vertrauenswürdige Abrechnungsinformation für die erfolgte Nutzung der industriellen Vorrichtung zu erfassen, wird die Steuerkommunikation erfasst und ausgewertet.

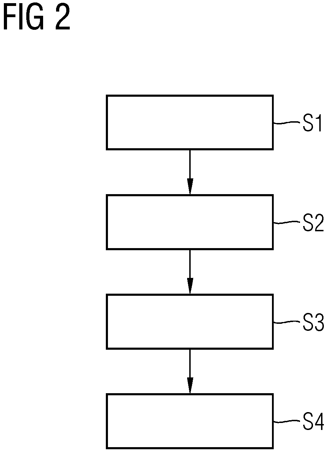

Dies wird nun anhand des Flussdiagramms in Fig. 2 näher beschrieben. Im Verfahrensschritt S1 wird eine zeitliche Abfolge von Steuerungsdatenpaketen, die hier auch als Steuerkommunikation bezeichnet wird, über die Kommunikationsverbindung 101 erfasst. Im nachfolgenden Verfahrensschritt S2 wird aus der erfassten Abfolge von Steuerungsdatenpaketen mindestens eine Nutzungsinformation identifiziert. Der Verfahrensschritt S3 wird dann anhand der mindestens einen identifizierten Nutzungsinformation eine Nutzungsart sowie eine Nutzungsdauer der jeweiligen Nutzungsart zugeordnet. Diese Nutzungsart und Nutzungsdauer wird im Verfahrensschritt S4 bereitgestellt.

Zum Identifizieren der Nutzungsinformation werden die erfassten Steuerdatenpakete aufbereitet. Beispielsweise werden die Steuerdatenpakete abhängig von einer MAC-Adresse, einer IP-Adresse, einer Portnummer oder Protokollkennungen vorgefiltert. Dabei kann eine Filterung nach einem oder auch einer Kombination der angegebenen Parameter gefiltert werden. Es können einzelne Steuerungsprotokollnachrichten und/oder Überwachungsprotokollnachrichten in den erfassten Steuerungsdatenpaketen identifiziert werden. Der Inhalt der Steuerungsprotokoll- und/oder Überwachungsprotokollnachrichten kann ausgewertet und aus der zeitlichen Abfolge eine Nutzungsinformation identifiziert werden. Dies kann beispielsweise durch eine Deep Packet Inspection erfolgen. Aus dem Inhalt dieser Protokollnachrichten kann sehr genau und detailliert die Nutzungsinformation gewonnen werden, aus der eine detaillierte Abfolge von Nutzungsart und Nutzungsdauer ermittelt werden kann.

Aus der erfassten Abfolge von Steuerungsdatenpaketen kann aber auch ein Verkehrsmuster aus statistischen Eigenschaften der erfassten Steuerdatenpakete ermittelt werden. Solche statistischen Eigenschaften sind beispielsweise die zeitliche Reihenfolge und Zeitabstände zwischen Steuerungsdatenpaketen oder identifizierten unterschiedlichen Steuerungsprotokoll- bzw. Überwachungsprotokollnachrichten.

Nutzungsinformation kann aber auch anhand von mindestens einem Datenmuster identifiziert werden, das anhand eines maschinellen Lernverfahrens wie beispielsweise einem Klassifizierungsverfahren aus dem Datenstrom der Steuerungsdatenpaketen ermittelt wurde. Dazu wird das maschinelle Lernmodell anhand von bekannten Steuerungsdatenpaketabfolgen trainiert und einer Klasse, die jeweils einer bestimmten Nutzungsart entspricht, zugeordnet. Die Nutzungsdauer kann anhand der Dauer eines bestimmten Datenmusters zugeordnet werden.
Es können auch selbstlernende Klassifizierungsverfahren verwendet werden, bei denen neue Nutzungsarten selbstständig durch das maschinelle Lernverfahren identifiziert und einer Nutzungsart zugeordnet werden.

Die Steuerungsdatenpakete können unter Nutzung einer Einwegkommunikationsschnittstelle, wie beispielsweise einer Datendiode rückwirkungsfrei, das heißt ohne jeglichen Rückfluss von Daten in die industrielle Vorrichtung erfasst werden. Dies hat den Vorteil, dass das Verfahren auch in sicherheitskritischen industriellen Vorrichtungen bzw. industriellen Systemen angewandt werden kann. Dabei kann ausgewertet werden, wie häufig und/oder wie lange ein vorgegebenes Verkehrsmuster beobachtet wurde.

Um die Qualität der zugeordneten Nutzungsart und Nutzungsdauer einschätzen zu können, kann diese Information mit Nutzungsdaten, die mittels separater Sensoren, die physikalische Eigenschaften der industriellen Vorrichtung 10 detektieren, verglichen werden. Des Weiteren können Überwachungsdaten zwischen der Steuervorrichtung 20 und der übergeordneten Überwachungsvorrichtung 30 durch die Erfassungsvorrichtung 42 erfasst werden und in der Nutzungsermittlungsvorrichtung mit der Nutzungsinformation bzw. der zugeordneten Nutzungsart und Nutzungsdauer verglichen werden. Darüber können auch zusätzliche Informationen zur industriellen Vorrichtung, wie beispielsweise eine "Liveliness" überwacht werden, das heißt ob die erwarteten Steuerungsdatenpakete beobachtet werden.

Auch bei Nicht-Nutzung der industriellen Vorrichtung werden im Allgemeinen Steuerungsdaten übertragen, aber andere Steuerungsprotokollnachrichten bzw. Steuerungsdatenpakete mit einem anderen Verkehrsmuster oder Datenmuster als bei Benutzung der Maschine. Wenn beispielsweise keines der erwarteten Verkehrsmuster beobachtet wird, kann auf eine Fehlfunktion bzw. Manipulation geschlossen werden.
Beispielsweise kann ein Warnsignal bereitgestellt werden, wenn in einer vorbestimmten Zeitdauer keine Nutzungsart und Nutzungsdauer bereitgestellt wird bzw. wenn die identifizierte Nutzungsinformation bzw. Nutzungsart und Nutzungsdauer auf der Kommunikationsverbindung 101 zwischen industrieller Vorrichtung 10 und Steuervorrichtung 20 nicht mit den Überwachungsdaten, die zwischen Steuervorrichtung 20 und der übergeordneten Überwachungsvorrichtung 30 erfasst werden, übereinstimmen.

Werden mehrere industrielle Vorrichtungen über separate Kommunikationsverbindungen von der gleichen Steuervorrichtung 20 gesteuert, können deren Nutzungsart und Nutzungsinformation getrennt entsprechend dem beschriebenen Verfahren ermittelt werden. Betriebsnutzungsdaten aus verschiedenen Teilnetzwerken können in gleicher Weise ermittelt werden und zu einer Gesamtnutzung des industriellen Systems kumuliert werden.

Die Nutzungsermittlungsvorrichtung 40 kann, wie in Fig. 1 dargestellt, die Steuerungsdatenpakete außerhalb der industriellen Vorrichtung 10 an der Kommunikationsverbindung 101 erfassen. Alternativ dazu können die Steuerungsdatenpakete an einem innerhalb der industriellen Vorrichtung angeordneten Teil der Kommunikationsverbindung 101 erfasst werden.

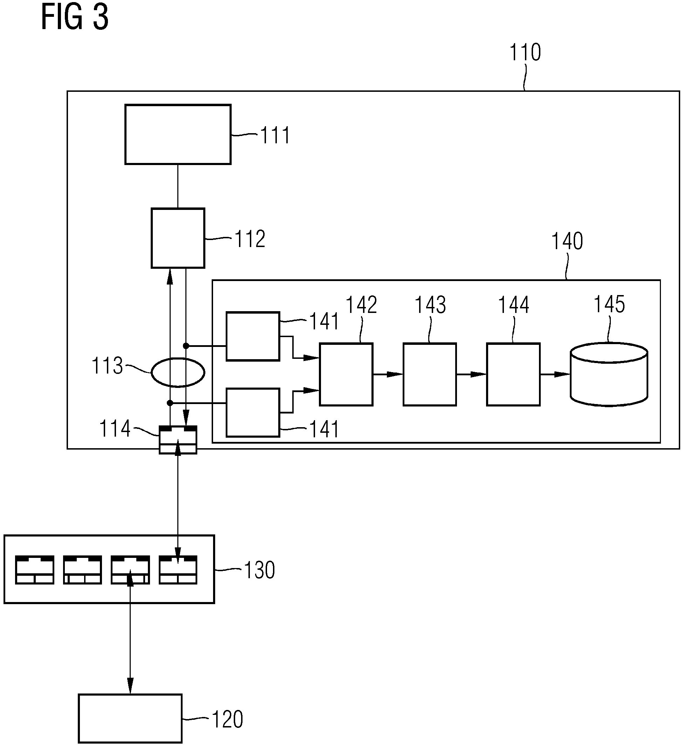

In Fig. 3 wird eine Nutzungsermittlungsvorrichtung 140 beschrieben, die die Steuerdatenpakete innerhalb der industriellen Vorrichtung 110 abgreift.

Die industrielle Vorrichtung 110 ist über eine Kommunikationsverbindung 113 in Form einer Ethernetverbindung über einen Ethernetswitch 130 mit der Steuervorrichtung 120 verbunden. Die Steuerdatenpakete werden von einer zentralen Prozessoreinheit 111 an eine physische Ausgabeschnittstelle 112 übergeben, die die Steuerungsdatenpakete an den Bitübertragungsstandard der Ethernetverbindung anpasst. Die Steuerungsdatenpakete werden auf der Kommunikationsverbindung 113 innerhalb der industriellen Vorrichtung, hier zwischen der physischen Ausgabeschnittstelle 112 und einem Ethernetstecker 114 an die Nutzungsermittlungsvorrichtung 140 ausgekoppelt.

Die Nutzungsermittlungsvorrichtung 140 umfasst eine Datenerfassungsvorrichtung 142, die hier zu einer rückwirkungsfreien Datenerfassung für jeweils eine Übertragungsrichtung ebenfalls eine physikalische Ausgabeschnittstelle 141 aufweist und eine rückwirkungsfreie Auskopplung der Steuerungskommunikation für jede der beiden Übertragungsrichtungen gewährleistet. Des Weiteren werden die erfassten Steuerungsdatenpakete in der Datenerfassungsvorrichtung 142 für die nachfolgende Analyse aufbereitet, beispielsweise gefiltert. Die Zuordnungseinheit 143 ist derart konfiguriert, die Steuerungsprotokollnachrichten zu identifizieren und auch Überwachungsprotokolldaten, aus denen die Nutzungsart und die Nutzungsdauer abgeleitet werden, zu ermitteln. Die entsprechende Nutzungsart und Nutzungsdauer kann anhand der erkannten Steuerprotokollnachrichten und eines erkannten Verkehrsmusters abgeleitet werden. Beispielsweise können Start- und Stoppbefehle oder auch eine Parametrierung der industriellen Vorrichtung, wie z. B. Leistungseinstellungen, den Protokollnachrichten entnommen werden. Alternativ können die erfassten Steuerungsdatenpakete an einen zentralen Server wie etwa ein Cloud-Backend übertragen und dort identifiziert und zugeordnet werden.

Werden kryptografisch geschützte Steuerdatenpakete erfasst, so kann insbesondere durch Ermittlung eines Verkehrsmusters oder durch Ermittlung eines Datenmusters, das erfasste Datenvolumen oder die Anzahl von verschlüsselten Steuerdatenpaketen auf die Maschinennutzung geschlossen werden. Die ermittelte Nutzungsart und Nutzungsdauer wird anschließend in einer Bereitstellungseinheit 144 abgelegt. Die Nutzungsart und Nutzungsdaten können dann von der Bereitstellungseinheit abgerufen werden oder von der Bereitstellungseinheit 144 in einem vorgegebenen Zeitschema oder durch ein Ereignis getriggert von der Bereitstellungseinheit ausgegeben werden.

Durch das beschriebene Verfahren und die beschriebene Nutzungsermittlungsvorrichtung kann ein Betreiber einer industriellen Vorrichtung oder eines industriellen Systems Betriebsnutzungsdaten über die Steuerungskommunikation ermitteln. Diese Nutzungsart- und Nutzungsdauerwerte können direkt für die Abrechnung oder zur Plausibilisierung von Abrechnungsdaten verwendet werden. Diese Art der Ermittlung von Betriebsnutzungsdaten hat den Vorteil, dass Nutzungsart und Nutzungsdauer feingranular ausgewertet werden können. Verkehrsmuster und Protokollnachrichten können herangezogen werden, um bestimmte Nutzungsarten abzuleiten, beispielsweise Verarbeitung von harten oder weichen Materialien, und diese entsprechend verrechnen. So kann eine Auswertung nach Verschleiß der Maschine erfolgen.

Die so gewonnenen Nutzungsdaten können auch herangezogen werden, um Lizenz- und Haftungsansprüche zu klären. Das Wissen über die Nutzung der industriellen Vorrichtung kann helfen, die Entwicklung von Produkten besser mit dem Bedarf der Kunden abzustimmen. Verfahren zur Identifizierung und Zuordnung der Nutzungsinformation bzw. Nutzungsart und Nutzungsdauer können, da insbesondere als Software realisiert, einfach aktualisiert und implementiert werden. Durch einen rückwirkungsfreien Abgriff der Steuerungsdatenpakete wird sichergestellt, dass die industrielle Vorrichtung oder auch das industrielle System durch die Ermittlung der Betriebsnutzung nicht negativ beeinflusst werden. Das Verfahren bzw. die Nutzungsermittlungsvorrichtung ist damit insbesondere auch für den Einsatz in kritischen Infrastrukturen oder Kontrollsystemen geeignet.

Somit stellen das beschriebene Verfahren und die Nutzungsermittlungsvorrichtung eine Lösungsgrundlage zur Ermittlung von Betriebsnutzungsart und -dauer bereit, die ohne den Einsatz zusätzlicher Sensoren zur Erfassung physikalischer Parameter der industriellen Vorrichtung auskommt und stellen somit ein gegenüber einer Sensoren-basierten Benutzungsermittlung weitaus sichereres Verfahren dar.

Alle beschriebenen und/oder gezeichneten Merkmale können im Rahmen der Erfindung vorteilhaft miteinander kombiniert werden. Alle beschriebenen Verfahrensmerkmale können durch die Nutzungsermittlungsvorrichtung ausgeführt werden. Die Erfindung ist nicht auf die beschriebenen Ausführungsbeispiele beschränkt.

## Patentansprüche

1. Verfahren zum Ermitteln von Betriebsnutzungsdaten einer industriellen Vorrichtung (10), die von einer Steuervorrichtung (20) gesteuert wird, umfassend
- Erfassen (S1) einer zeitlichen Abfolge von Steuerungsdatenpaketen, die über eine Kommunikationsverbindung (101) zwischen der Steuervorrichtung (20) und der industriellen Vorrichtung (10) übertragen werden,
- Identifizieren (S2) von mindestens einer Nutzungsinformation in der zeitlichen Abfolge der erfassten Steuerungsdatenpakete,
- Zuordnen (S3) einer Nutzungsart sowie einer Nutzungsdauer anhand der mindestens einen identifizierten Nutzungsinformation, und
- Bereitstellen (S4) der zugeordneten Nutzungsart und Nutzungsdauer.

2. Verfahren nach Anspruch 1, wobei zum Identifizieren der Nutzungsinformation die erfassten Steuerungsdatenpakete nach mindestens einem protokollabhängigen Übertragungsparameter, insbesondere einer MAC-Adresse, einer IP-Adresse, einer Portnummer oder einer Protokollkennung gefiltert werden.

3. Verfahren nach einem der vorangehenden Ansprüche, wobei die Nutzungsinformation durch ein Ermitteln von Steuerungsprotokollnachrichten und/oder Überwachungsprotollnachrichten in den erfassten Steuerungsdatenpaketen identifiziert wird.

4. Verfahren nach Anspruch 3, wobei das Nutzungsinformation durch ein Auswerten eines Inhaltes der Steuerungsprotokollnachrichten und/oder Überwachungsprotokollnachrichten identifiziert wird.

5. Verfahren nach Anspruch 1 oder 2, wobei die mindestens eine Nutzungsinformation anhand eines Verkehrsmusters, das aus statistischen Eigenschaften der erfassten Steuerungsdatenpakete ermittelt wird, identifiziert wird.

6. Verfahren nach Anspruch 1 oder 2, wobei anhand eines maschinellen Lernverfahrens, das auf die Steuerungsdatenpakete angewandt wird, die Nutzungsinformation identifiziert und der Nutzungsart und Nutzungsdauer zugeordnet werden.

7. Verfahren nach einem der vorangehenden Ansprüche, wobei die Steuerungsdatenpakete dupliziert und ohne jeglichen Rückfluss von Daten an die industrielle Vorrichtung (10, 110) aus der Kommunikationsverbindung (101, 113) ausgekoppelt werden.

8. Verfahren nach einem der vorangehenden Ansprüche, wobei die Steuerungsdatenpakete innerhalb der industriellen Vorrichtung(10, 110), erfasst werden.

9. Verfahren nach einem der vorangehenden Ansprüche, wobei das Identifizieren und/oder das Zuordnen und/oder das Bereitstellen durchgeführt wird.

10. Verfahren nach einem der vorangehenden Ansprüche, wobei die zugeordnete Nutzungsart und Nutzungsdauer kryptographisch geschützt bereitgestellt werden.

11. Verfahren nach einem der vorangehenden Ansprüche, wobei Überwachungsdaten zwischen der Steuervorrichtung (20, 120) und einer übergeordneten Überwachungsvorrichtung (30) erfasst und ausgewertet werden und gegenüber der Nutzungsinformation und/oder der Nutzungsart und Nutzungsdauer auf Plausibilität überprüft werden.

12. Verfahren nach einem der vorangehenden Ansprüche, wobei ein Warnsignal bereitgestellt wird, wenn in einer vorbestimmten Zeitdauer keine Nutzungsart und Nutzungsdauer bereitgestellt werden und/oder ein nicht erwartetes Systemverhalten erkannt wird.

13. Verfahren nach einem der vorangehenden Ansprüche, wobei in einem industriellen System (100), das mehr als ein Teilnetz (50) enthält, und ein Teilnetz (50) jeweils aus einer industriellen Vorrichtung (10, 110) und einer die industrielle Vorrichtung (10, 110) steuernde Steuervorrichtung (20, 120) umfasst, die Nutzungsart und Nutzungsdauer für jedes Teilnetz ermittelt und bereitgestellt werden.

14. Nutzungsermittlungsvorrichtung zum Ermitteln von Betriebsnutzungsdaten umfassend
- eine Datenerfassungseinheit (142), die mit einer Kommunikationsverbindung (113) einer industriellen Vorrichtung (110) verbindbar ist und derart ausgebildet ist, eine zeitliche Abfolge von Steuerungsdatenpaketen zu erfassen,
- eine Identifizierungseinheit (143), die derart ausgebildet ist, mindestens eine Nutzungsinformation in dem zeitlichen Verlauf der erfassten Steuerungsdatenpakete zu identifizieren,
- eine Zuordnungseinheit (144), die derart ausgebildet ist, eine Nutzungsart sowie eine Nutzungsdauer anhand der mindestens einen identifizierten Nutzungsinformation zuzuordnen, und
- eine Bereitstellungseinheit (145), die derart ausgebildet ist, die zugeordnete Nutzungsart und Nutzungsdauer bereitzustellen.

15. Computerprogrammprodukt, umfassend ein nicht flüchtiges Computerlesbares Medium, das direkt in einen Speicher eines digitalen Computers ladbar ist, umfassend Programmcodeteile, die dazu geeignet sind, die Schritte des Verfahrens nach einem der Ansprüche 1 bis 13 durchzuführen.
